# EUROPEAN PATENT APPLICATION

(11) **EP 2 671 449 A1**
(43) Date of publication of application: **11.12.2013**
(21) Application number: 12171030.5
(22) Date of filing: 06.06.2012
(51) Int. Cl.: A01N 25/04, A01N 25/08, A01N 25/34, A01N 59/00, B01J 23/22, C01G 31/02

(54) **Use of vanadium pentoxide particles as a biocide**

(71) Applicant: Construction Research & Technology GmbH, 83308 Trostberg (DE)
(72) Inventor: André, Rute, 55118 Mainz (DE); Natalio, Filipe, Dr., 55116 Mainz (DE); Tremel, Wolfgang, Prof. Dr., 55283 Nierstein (DE); Wever, Ron, Dr., 1622 HG Hoorn (NL); Hartog, Aloysius, 2015 AG Haarlem (NL)

(57) **Abstract**

We suggest the use of vanadium pentoxide particles as a biocide. Moreover, we suggest a biocidal composition comprising such vanadium pentoxide particles, a method for preventing biofouling of a substrate and a method of imparting biocidal properties to the surface of a substrate.

## Description

The present invention relates to the use of vanadium pentoxide particles as a biocide. Furthermore, it relates to a biocidal composition comprising such vanadium pentoxide particles, to a method for preventing biofouling of a substrate and to a method of imparting biocidal properties to the surface of a substrate.

Marine biofouling is an everlasting and costly problem for the maritime industry. Some solutions exist in the form of fouling resistant marine coatings. Barnacles, green algae, diatoms, and mussels are notorious for attaching to and damaging man-made structures. The growth of fouling assemblages on ship hulls causes increased drag, reducing maneuverability, increasing fuel consumption and greenhouse gas emissions and thus has both economic and environmental costs.

In closed water systems (water purification, desalination and the like) using e.g. plastic parts such as pipes, filters, valves or tanks, surfaces can be subject to bacterial or algal colonization and biofilm formation, followed by deterioration of the materials and contamination of the circuit liquids. Another problem is the spoilage of water and/or aqueous compositions stored in containers for a prolonged period.

Other problems with said surfaces can derive from e.g. algal or bacterial biofilm formation resulting in an undesired change in their hydrodynamic properties and affecting e.g. the flow-rate in pipes, or also the trouble-free use of boats, marine or other limno-logical applications.

The relevant surfaces are often coated with paints, e.g. water based paints. Conventional water based paints are often preserved by adding non-enzymatic organic biocides such as thiocyanate, tetracycline, or isothiazoliones to the paint. Water based paints must be preserved to prevent microbial growth enabled by the increased water activity in these paints. Therefore, large amounts of conventional biocides are used for this purpose. This has stimulated the search for environmentally benign alternatives to the conventional biocides.

Antifouling paints based on the cytotoxic effects of metal complexes have been banned because of the deleterious effects of accumulating metals such as copper or tin from polymer coatings thus prompting increased research into sustainable alternatives. Coatings that do not release biocides, such as "fouling-release" silicone elastomers are considered environmentally benign and therefore more adequate. However, these coatings lack antifouling properties under static conditions, and hydrodynamic shear is needed to release the fouling organisms. Thus, a universally applicable solution for vessels that are either stationary or slow moving and that is effective against a broad range of fouling organisms is needed.

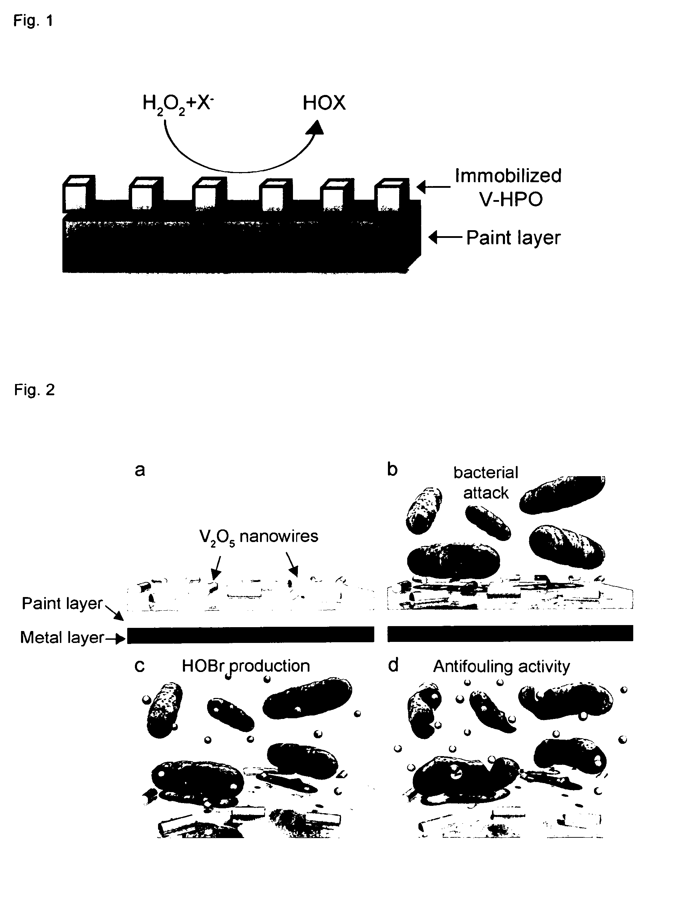

Haloperoxidases have been proposed as antifouling additives.^{[1]} Vanadium haloperoxidases (VHPOs) are enzymes that catalyze the oxidation of halides to the corresponding hypohalous acids according to H₂O₂ + X⁻ + H⁺ = HOX + H₂O using hydrogen peroxide (H₂O₂) as the oxidant.^{[2]} When suitable nucleophilic acceptors are present, halogenated compounds are formed. The presence of the haloperoxidases in organisms is believed to be related with the production of halogenated compounds with biocidal activity.^{[3]} Seawater contains about 1 mM of Br⁻ and 500 mM of Cl⁻, and as long as sufficient amounts of peroxide are present the antifouling paint will continuously generate HOX as a bactericidal agent. HOX that has a strong antibacterial effect. Fig. 1 illustrates the concept of anti-fouling activity of V-HPO when immobilized onto a paint layer.

WO 95/27009 A1 suggests that the antimicrobial activities of vanadium chloroperoxidases may be used to prevent fouling of a marine paint surface by immobilizing the haloperoxidase in the paint surface and use halides and hydrogen peroxide present in sea water to provide antimicrobial reactions. Examples of this use include vanadium chlorohaloperoxidase mixed with a solvent-based chlorinated rubber antifouling product or immobilized in an acrylic latex or a polyacrylamide matrix. The activity of a haloperoxidase in the conventional growth inhibiting agent (the chlorinated rubber antifouling product) is however very low due to the solvent of the antifouling agent and poor miscibility of the fouling agent with the haloperoxidase. Moreover, the enzymes are quite expensive and unstable.

A limiting factor may be the concentration of hydrogen peroxide in seawater, which is present in concentrations ranging from 0.1 to 0.3 mM.^{[4]} Hydrogen peroxide is generated by photooxidation processes of water initiated by the UV light of the sun. Also as a result of biological activity peroxide may be generated resulting in higher peroxide levels. The idea to combat biofouling of surfaces by enzymes has its roots in the physiological role of the vanadium bromoperoxidase. In some seaweed the peroxidase is located extracellularly on the surface of the plant,^{[5]} and its possible role is to control colonization of surface seaweed by generating bactericidal HOBr. In addition, it was demonstrated that very low concentrations of HOBr inactivated bacterial homoserine lactones.^{[3]} These compounds play an important role in bacterial signaling systems. Interference with these systems inhibits bacterial biofilm formation, a first step in the fouling of surfaces.^{[3]} Similarly, it could be shown that some red macro-algae produced halogenated furanones that are encapsulated in gland cells in the seaweed, which provides a mechanism for the delivery of the metabolites to the surface of the algae at concentrations that deter a wide range of prokaryote and eukaryote fouling organisms.^{[6]}

US 7,063,970 B1 describes the concept and advantages of using oxidoreductases for the preservation and/or conservation of water based paints as an alternative to conventional environmentally hazardous biocides. EP 500 387 A2 describes haloperoxidases for use in antiseptic pharmaceutical products.

V₂O₅ nanoparticles have been demonstrated to exhibit an intrinsic catalytic activity towards classical peroxidase substrates such as 2,2-Azino-bis(3-ethylbenzothiazoline-6-sulfonic acid) (ABTS) and 3,3,5,5,-tetramethylbenzdine (TMB) in the presence of H₂O₂. V₂O₅ nanoparticles showed an optimum reactivity at a pH of 4.0, and the catalytic activity was dependent on their concentration. The Michaelis-Menten kinetics of the ABTS oxidation reveals a behavior similar to their natural counterpart, vanadium-dependent haloperoxidase (V-HPO). The kinetic parameters indicate a (i) higher affinity of the substrates to the V₂O₅ nanowire surface and (ii) the formation of an intermediate metastable peroxo complex during the first catalytic step. The nanostructured vanadium-based material can be recycled and retains its catalytic activity in a wide range of organic solvents (up to 90%).^{[18]}

MoO₂ and MoO₃ have been shown to exhibit an antimicrobial effect.^{[19]}

Fe₃O₄ nanoparticles have been shown to exhibit an intrinsic peroxidase mimetic activity similar to that found in natural peroxidases which are used to oxidize organic substrates in the treatment of wastewater or as detection tools.^{[20]}

CeO₂ nanoparticles have been shown to exhibit an intrinsic superoxide dismutase activity that protect biological tissues against radiation induced.^{[21]}

The technical problem underlying the present invention can be seen in substantially avoiding at least some of the problems of the quoted prior art. In particular, environmentally benign alternatives to the conventional biocides were sought which would additionally avoid the need for incorporating isolated enzymes in coating compositions.

This problem has been solved with the technical features of the independent claims. The dependent claims pertain to preferred embodiments. In particular, it has been found that vanadium pentoxide particles can be used as a biocide, e.g. by incorporating said particles into polymer and/or plastic coatings or by rinsing surfaces of substrates (including the coatings thereon) with rinsing liquors containing the antimicrobial vanadium pentoxide particles. The present invention thus provides the substitution of conventional chemical biocides or costly and sensitive enzymatic systems as preservation systems.

Fig. 2 illustrates an embodiment of using environmentally benign V₂O₅ nanoparticles as an active component in antibacterial and antifouling formulations. The V₂O₅ nanoparticles exhibit a catalytic halogenation activity that allows the formation of HOBr under seawater conditions (pH 8.1 and appropriate Br and H₂O₂ concentrations). In this embodiment the particles are embedded in a matrix (paint) and applied onto a stainless steel surface. The continuous release of small amounts of hypobromous acid exerts a strong antibacterial activity preventing the adhesion of bacteria, i.e., displaying a strong antifouling activity.

Therefore, the principal object of the present invention is the use of vanadium pentoxide particles as a biocide.

As mentioned above, the effect of "biofouling" is caused by bacterial or algal growth with biofilm formation. Also Barnacles, diatoms, and mussels are notorious for attaching to and damaging man-made structures. "Biofilms" are understood, very generally, to be aggregation of living and dead micro-organisms, especially bacteria, that adhere to living and non-living surfaces, together with their metabolites in the form of extracellular polymeric substances (EPS matrix), e.g. polysaccharides. The activity of antimicrobial substances that normally exhibit a pronounced growth-inhibiting or lethal action with respect to microorganisms ("biocides") may be greatly reduced with respect to microorganisms that are organized in biofilms, for example because of inadequate penetration of the active substance into the biological matrix.

Another principle object of the invention is the use of vanadium pentoxide particles for the prevention of biofouling and/or growth of microorganisms.

Particularly, the use of vanadium pentoxide particles allows to prevent the growth of bacteria and/or organisms that cause biofouling, such as algae, barnacles, diatoms, mussels.

As mentioned above, the vanadium pentoxide particles of the invention are dependent on the presence of an oxidizing agent and a halide. Very often these co-agents are naturally present such as in seawater. Sometimes, however, these co-agents are absent or not present in sufficient quantities. In these cases the vanadium pentoxide particles should be used together with an oxidizing agent and a halide selected from chloride, bromide and iodide. The oxidizing agent is preferably hydrogen peroxide. On the other hand, it is also possible to provide the oxidizing agent such as hydrogen peroxide through in situ formation.

In the context of the invention the term "oxidizing agent" is to be viewed as a chemical or biological compound, which may act as an electron acceptor and/or oxidant. The oxidizing agent may mediated by a metal oxide catalyst oxidize an electron donor substrate, e.g. an enhancer. An "enhancer" is to be viewed as a chemical compound, which upon interaction with an oxidizing agent, becomes oxidized or otherwise activated and which in its oxidized or otherwise activated state provides a more powerful antimicrobial effect than could be obtained by the oxidizing agent alone.

It should be kept in mind that the vanadium pentoxide particles, in connection with said oxidizing agent and said halide, produces hypohalous acid which is the active biocidal species. This biocidal species, in turn, is capable of penetrating biofilms on living and non-living surfaces, of preventing the adhesion of bacteria to surfaces and any further build-up of the biofilm, of detaching such biofilm and/or inhibiting the further growth of the biofilm-forming micro-organisms in the biological matrix, and/or of killing such microorganisms.

According to the present invention the vanadium pentoxide particles have an average particle size of from 5 nm to 1 mm, preferably from 10 nm to 1 µm and particularly from 10 nm to 500 nm.

Moreover, the vanadium pentoxide particles of the invention are suitably nanoparticles, preferably nanowires. "Nanoparticles" are particles with one, two or three external dimensions between approximately 1 nm and 100 nm. "Nanowires" are to be understood as needle-like nanoparticles with an average length of 100 to 500 nm, preferably ca. 300 nm, and an average width of 10 to 40 nm, preferably ca. 20 nm.

The vanadium pentoxide particles of the invention, however, are not limited to nanoparticles or nanowires. It is possible to grind vanadium pentoxide (e.g. in aqueous suspension or in other organic liquids) to an average particle size of between 100 nm and 100 µm. These larger particles, too, show a suitable catalytic (biocidal) effect when in contact with the oxidizing agent and the halide.

A further principle object of the present invention is a biocidal composition comprising vanadium pentoxide particles as defined hereinabove, dispersed in a matrix material, which matrix material is selected from coating binders, coating materials containing binders, solvents and/or further coating additives, water, aqueous solutions.

Different embodiments can be envisaged herein. In one embodiment the biocidal composition is dispersed in a coating composition. This coating may be a polymer and/or plastic coating, i.e. the matrix forming the coating may be selected from coating binders, coating materials containing binders, solvents and/or further coating additives. The coating composition, once applied and optionally dried and/or cured, forms a biocidal and/or antifouling surface. Examples of such coatings comprise paints including water based paints. Another embodiment of a biocidal composition of the invention is directed to washing and cleaning formulations, e.g. household and general-purpose cleaners for cleaning and disinfecting hard surfaces, rinsing liquors and the like, containing the antimicrobial vanadium pentoxide particles. In the latter embodiment the matrix is meant to comprise water and/or aqueous solutions.

A preferred object of the present invention is thus a biocidal composition which is a coating composition wherein the matrix material comprises one or more film forming binders.

Another preferred object of the present invention is thus a biocidal composition in the form of an aqueous formulation.

In the context of the invention the term "paint" is to be viewed as a coating composition usually comprising solid coloring matter dissolved or dispersed in a liquid dispersant, organic solvent and/or oils, which when spread over a surface, dries to leave a thin colored, decorative and/or protective film. In the context of the invention this term is however also viewed to encompass water based enamel, lacquer and/or polish compositions. A "water based paint" is meant to comprise at least 10 percent by weight of water.

Furthermore, in the biocidal composition of the invention the matrix material may be a coating binder or film forming binder, or the matrix material may be water or an aqueous solution or formulation selected from water processing fluids, aqueous cooling fluids, cleaning compositions, rinsing liquors.

Moreover, in the biocidal composition of the invention vanadium pentoxide particles may be comprised in an amount of 0.0001 to 5.0 percent by weight, preferably 0.001 to 1.0 percent by weight, relative to the weight of the matrix material.

The biocidal components of this invention are useful in coatings or films in protecting surfaces from biofouling. Such surfaces include surfaces in contact with marine environments (including fresh water, brackish water and salt water environments), for example, the hulls of ships, surfaces of docks or the inside of pipes in circulating or pass-through water systems. Other surfaces are susceptible to similar biofouling, for example walls exposed to rain water, walls of showers, roofs, gutters, pool areas, saunas, floors and walls exposed to damp environs such as basements or garages and even the housing of tools and outdoor furniture.

The cleansing formulation or the rinsing liquor of the present invention as mentioned above, is an aqueous formulation containing besides the biocidal agent of the invention conventional components like surfactants, which may be nonionic, anionic or zwitterionic compounds, sequestering agents, hydrotropes, alkali metal hydroxides (sources of alkalinity), preservative, fillers, dyes, perfumes and others. The components and their use in rinsing liquors are well known to those skilled in the art.

A further principle object of the present invention is a method for preventing biofouling of a substrate, which method comprises adding vanadium pentoxide particles as defined hereinabove to a suitable matrix material and contacting said matrix material with the substrate or coating said matrix material onto the substrate.

A further principle object of the present invention is a method of imparting biocidal properties to the surface of a substrate, which method comprises coating the surface with a biocidal composition of the invention which contains a coating binder or film forming binder.

Some of the materials that can be used in connection with the present invention are exemplified hereinbelow. The substrate can be a two-dimensional object such as a sheet or a film, or any three dimensional object; it can be transparent or opaque. The substrate can be made from paper, cardboard, wood, leather, metal, textiles, nonwovens, glass, ceramics, stone and/or polymers.

Examples of metals are iron, nickel, palladium, platinum, copper, silver, gold, zinc, aluminum and alloys such as steel, brass, bronze and duralumin.

Textiles can be made from natural fibers such as fibers from animal or plant origin, or from synthetic fibers. Examples of natural fibers from animal origin are wool and silk. Examples of natural fibers from plant origin are cotton, flax and jute. Examples of synthetic textiles are polyester, polyacrylamide, polyolefins such as polyethylene and polypropylene and polyamides such as nylon and lycra.

Examples of ceramics are products made primarily from clay, for example bricks, tiles and porcelain, as well as technical ceramics. Technical ceramics can be oxides such as aluminum oxide, zirconium dioxide, titanium oxide and barium titanate, carbides such as sodium, silicon or boron carbide, borides such as titanium boride, nitrides such as titanium or boron nitride and silicides such as sodium or titanium silicide. Examples of stones are limestone, granite, gneiss, marble, slate and sandstone.

Examples of polymers are acrylic polymers, styrene polymers and hydrogenated products thereof, vinyl polymers and derivatives thereof, polyolefins and hydrogenated or epoxidized products thereof, aldehyde polymers, epoxide polymers, polyamides, polyesters, polyurethanes, polycarbonates, sulfone-based polymers and natural polymers and derivatives thereof.

When applied as a part of a film or coating, the biocidal vanadium pentoxide particles of this invention are part of a composition which also comprises a binder.

The binder may be any polymer or oligomer compatible with the present vanadium pentoxide particles. The binder may be in the form of a polymer or oligomer prior to preparation of the antifouling composition, or may form by polymerization during or after preparation, including after application to the substrate. In certain applications, such as certain coating applications, it will be desirable to crosslink the oligomer or polymer of the antifouling composition after application.

The term "binder" as used in the present invention also includes materials such as glycols, oils, waxes and surfactants commercially used in the care of wood, plastic, glass and other surfaces. Examples include water proofing materials for wood, vinyl protectants, protective waxes and the like.

The composition may be a coating or a film. When the composition is a thermoplastic film which is applied to a surface, for example, by the use of an adhesive or by melt applications including calendaring and co-extrusion, the binder is the thermoplastic polymer matrix used to prepare the film.

When the composition is a coating, it may be applied as a liquid solution or suspension, a paste, gel, oil or the coating composition may be a solid, for example a powder coating which is subsequently cured by heat, UV light or other method.

As the composition to be protected may be a coating or a film, the binder can be comprised of any polymer used in coating formulations or film preparation. For example, the binder is a thermoset, thermoplastic, elastomeric, inherently crosslinked or crosslinked polymer.

Thermoset, thermoplastic, elastomeric, inherently crosslinked or crosslinked polymers include polyolefin, polyamide, polyurethane, polyacrylate, polyacrylamide, polycarbonate, polystyrene, polyvinyl acetates, polyvinyl alcohols, polyester, halogenated vinyl polymers such as PVC, natural and synthetic rubbers, alkyd resins, epoxy resins, unsaturated polyesters, unsaturated polyamides, polyimides, silicon containing and carbamate polymers, fluorinated polymers, crosslinkable acrylic resins derived from substituted acrylic esters, e.g. from epoxy acrylates, urethane acrylates or polyester acrylates. The polymers may also be blends and copolymers of the preceding chemistries.

Biocompatible coating polymers, such as, poly[-alkoxyalkanoate-co-3-hydroxyalkenoate] (PHAE) polyesters, Geiger et. al. Polymer Bulletin 52, 65-70 (2004), can also serve as binders in the present invention.

Alkyd resins, polyesters, polyurethanes, epoxy resins, silicone containing polymers, polyacrylates, polyacrylamides, fluorinated polymers and polymers of vinyl acetate, vinyl alcohol and vinyl amine are non-limiting examples of common coating binders useful in the present invention. Other coating binders, of course, are part of the present invention.

Coatings are frequently crosslinked with, for example, melamine resins, urea resins, isocyanates, isocyanurates, polyisocyanates, epoxy resins, anhydrides, poly acids and amines, with or without accelerators.

The biocidal compositions of present invention are for example a coating applied to a surface which is exposed to conditions favorable for bioaccumulation. The presence of vanadium pentoxide particles of this invention in said coating will prevent the adherence of organisms to the surface.

The vanadium pentoxide particles of the present invention may be part of a complete coating or paint formulation, such as a marine gel-coat, shellac, varnish, lacquer or paint, or the antifouling composition may comprise only a polymer of the instant invention and binder, or a polymer of the instant invention, binder and a carrier substance. It is anticipated that other additives encountered in such coating formulations or applications will find optional use in the present applications as well. The coating may be solvent borne or aqueous. Aqueous coatings are typically considered more environmentally friendly.

The coating is, for example, aqueous dispersion of a polymer of the instant invention and a binder or a water based coating or paint. For example, the coating comprises an aqueous dispersion of a polymer of the instant invention and an acrylic, methacrylic or acrylamide polymers or co-polymers or a poly[-alkoxyalkanoate-co-3-hydroxyalkenoate] polyester.

The coating may be applied to a surface which has already been coated, such as a protective coating, a clear coat or a protective wax applied over a previously coated article.

Coating systems include marine coatings, wood coatings, other coatings for metals and coatings over plastics and ceramics. Exemplary of marine coatings are gel coats comprising an unsaturated polyester, a styrene and a catalyst.

The coating is, for example a house paint, or other decorative or protective paint. It may be a paint or other coating that is applied to cement, concrete or other masonry articles. The coating may be a water proofer as for a basement or foundation.

The coating composition is applied to a surface by any conventional means including spin coating, dip coating, spray coating, draw down, or by brush, roller or other applicator. A drying or curing period will typically be needed.

Coating or film thickness will vary depending on application and will become apparent to one skilled in the art after limited testing.

Besides the vanadium pentoxide particles of this invention, the present compositions, especially the aqueous compositions or the coating compositions, may comprise one or more further antimicrobial or biocidal agents or auxiliary agents, for example pyrithiones, especially the sodium, copper and/or zinc complex (ZPT); Octopirox®; 1-(4-chlorophenyoxy)-1-(1-imidazolyl)3,3-dimethyl-2-butanone (Climbazol®), selensulfide; antifouling agents like Fenpropidin, Fenpropimorph, Medetomidine, Chlorothalonil, Dichlofluanid (N' -dimethyl-N-phenylsuphamide); 4,5-dichloro-2-n-octyl-3(2H)-isothiazolone (SeaNine™, Rohm and Haas Company); 2-methylthio-4-tert-butylamino-6-cyclopropylamino-striziane; Diuron (3-(3,4-dichlorophenyl)-1, 1-dimethylurea); Tolylfluanid (N-(Dichloroflouromethylthio )-N' ,N'dimethyl-N-p-tolylsufamide); microparticles or nanoparticles ZnO (e.g. < 53 nm), TiO₂ (e.g. < 40 nm), CuO (e.g. 33 nm -12 nm; isothiazolinones such as methylchloroisothiazolinone/methylisothiazolinone (Kathon CG®); methylisothiazolinone, methylchloroisothiazolinone, octylisothiazolinone, benzylisothiazolinone, methylbenzisothiazolinone, butylbenzisothiazolinone, dichlorooctylisothiazolinone; inorganic sulphites and hydrogen sulphites, sodium sulfite; sodium bisulfite; imidazolidinyl urea (Germall 115®), diazolidinyl urea (Germall II®); ethyl lauroyl arginate, farnesol, benzyl alcohol, phenoxyethanol, phenoxypropanol, biphenyl-2-ol, phenethyl alcohol, 2,4-dichlorobenzyl alcohol, chlorbutanol, 1,2-diols, 1,2-pentandiol, 1,2-hexandiol, 1,2-octandiol, 1,2-propandiol, 3(2-ethylhexyloxy)propane (ethylhexyl-glycerin), 1,3-diols, 2-ethyl-1,3-hexandiol, ethanol, 1-propanol, 2-propanol; 5-bromo-5-nitro-1,3-dioxane (Bronidox ®), 2-bromo-2-nitropropane-1,3-diol (Bronopol®); dibromhexamidin; formaldehyde, paraformaldehyde; iodopropynyl butylcarbamate (Polyphase P100®); chloroacetamide; methanamine; methyldibromonitrile glutaronitrile, (1,2-dibromo-2,4-dicyanobutane or Tektamer®); glutaraldehyde; glyoxal; sodium hydroxymethylglycinate (Suttocide A®); polymethoxy bicyclic oxazolidine (Nuosept C®); dimethoxane; captan; chlorphenesin; dichlorophene; halogenated diphenyl ethers; 2,4,4'-trichloro-2'-hydroxy-diphenyl ether (Triclosan. or TCS); 4,4'-Dichloro-2-hydroxydiphenyl ether (Diclosan); 2,2'-dihydroxy-5,5'-dibromo-diphenyl ether; phenolic compounds; phenol; Para-chloro-meta-xylenol (PCMX); 2-Methyl Phenol; 3-Methyl Phenol; 4-Methyl Phenol; 4-Ethyl Phenol; 2,4-Dimethyl Phenol; 2,5-Dimethyl Phenol; 3,4-Dimethyl Phenol; 2,6-Dimethyl Phenol; 4-n-Propyl Phenol; 4-n-Butyl Phenol; 4-n-Amyl Phenol; 4-tert-Amyl Phenol; 4-n-Hexyl Phenol; 4-n-Heptyl Phenol; Mono- and PolyAlkyl and Aromatic Halophenols; p-Chlorophenol; Methyl p-Chlorophenol; Ethyl p-Chlorophenol; n-Propyl p-Chlorophenol; n-Butyl p-Chlorophenol; n-Amyl p-Chlorophenol; sec-Amyl p-Chlorophenol; Cyclohexyl p-Chlorophenol; n-Heptyl p-Chlorophenol; n-Octyl p-Chlorophenol; o-Chlorophenol; Methyl o-Chlorophenol; Ethyl o-Chlorophenol; n-Propyl o-Chlorophenol; n-Butyl o-Chlorophenol; n-Amyl o-Chlorophenol; tert-Amyl o-Chlorophenol; n-Hexyl o-Chlorophenol; n-Heptyl o-Chlorophenol; o-Benzyl p-Chlorophenol; o-Benxyl-m-methyl p-Chlorophenol; o-Benzyl-m; m-dimethyl p-Chlorophenol; o-Phenylethyl p-Chlorophenol; o-Phenylethyl-m-methyl p-Chlorophenol; 3-Methyl p-Chlorophenol; 3,5-Dimethyl p-Chlorophenol; 6-Ethyl-3-methyl p-Chlorophenol; 6-n-Propyl-3-methyl p-Chlorophenol; 6-iso-Propyl-3-methyl p-Chlorophenol; 2-Ethyl-3,5-dimethyl p-Chlorophenol; 6-sec-Butyl-3-methyl p-Chlorophenol; 2-iso-Propyl-3,5-dimethyl p-Chlorophenol; 6-Diethylmethyl-3-methyl p-Chlorophenol; 6-iso-Propyl-2-ethyl-3-methyl p-Chlorophenol; 2-sec-Amyl-3,5-dimethyl p-Chlorophenol; 2-Diethylmethyl-3,5-dimethyl p-Chlorophenol; 6-sec-Octyl-3-methyl p-Chlorophenol; p-Chloro-m-cresol: p-Bromophenol; Methyl p-Bromophenol; Ethyl p-Bromophenol; n-Propyl p-Bromophenol; n-Butyl p-Bromophenol; n-Amyl p-Bromophenol; sec-Amyl p-Bromophenol; n-Hexyl p-Bromophenol; Cyclohexyl p-Bromophenol; o-Bromophenol; tert-Amyl o-Bromophenol; n-Hexyl o-Bromophenol; n-Propyl-m,m-Dimethyl o-Bromophenol; 2-Phenyl Phenol; 4-Chloro-2-methyl phenol; 4-Chloro-3-methyl phenol; 4-Chloro-3,5-dimethyl phenol; 2,4-Dichloro-3,5-dimethylphenol; 3,4,5,6-Terabromo-2-methylphenol; 5-Methyl-2-pentylphenol; 4-Isopropyl-3-methylphenol Para-chloro-meta-xylenol (PCMX); Chlorothymol; Phenoxyethanol; Phenoxyisopropanol; 5-Chloro-2-hydroxydiphenylmethane; Resorcinol and its Derivatives; Resorcinol; Methyl Resorcinol; Ethyl Resorcinol; n-Propyl Resorcinol; n-Butyl Resorcinol; n-Amyl Resorcinol; n-Hexyl Resorcinol; n-Heptyl Resorcinol; n-Octyl Resorcinol; n-Nonyl Resorcinol; Phenyl Resorcinol; Benzyl Resorcinol; Phenylethyl Resorcinol; Phenylpropyl Resorcinol; p-Chlorobenzyl Resorcinol; 5-Chloro 2,4-Dihydroxydiphenyl Methane; 4'-Chloro 2,4-Dihydroxydiphenyl Methane; 5-Bromo 2,4-Dihydroxydiphenyl Methane; 4'-Bromo 2,4-Dihydroxydiphenyl Methane; ; bisphenolic compounds; 2,2'-methylene bis-(4-chlorophenol); 2,2'-methylene bis-(3,4,6-trichlorophenol); 2,2'-methylene bis-(4-chloro-6-bromophenol); bis(2-hydroxy-3,5-dichlorophenyl)sulfide; bis(2-hydroxy-5-chlorobenzyl)sulfide; halogenated carbanilides; 3,4,4'-trichlorocarbanilides (Triclocarban® or TCC); 3-trifluoromethyl-4,4'-dichlorocarbanilide; 3,3',4-trichlorocarbanilide; chlorohexidine and its digluconate; diac-etate and dihydrochloride; hydroxybenzoic acid and its salts and esters (parabenes); methylparaben, ethylparaben, propylparaben, butylparaben, isopropylparaben, isobu-tylparaben, benzylparaben, sodium methylparaben, sodium propylparaben; benzoic acid and its salts, lactic acid and its salts, citric acid and its salts, formic acid and its salts, performic acid and its salts, propionic acid and its salts, salicylic acid and its salts, sorbic acids and its salts, 10-undecylenic acid and its salts; decanoic acid and its salts; dehydroacetic acid, acetic acid, peracetic acid, bromoacetic acid, nonanoic acid, lauric acid and its salts, glyceryl laurate, hydrochloric acid and its salts, sodium hypo-chlorite, hydrogen peroxide, sodium hydroxy methyl-aminoacetate, sodium hy-droxymethylglycinate, thiabendazole, hexetidine (1,3-bis(2-ethylhexyl)-hexahydro-5-methyl-5-pyrimidine); poly(hexamethylenebiguanide) hydrochloride (Cosmocil); hydroxy biphenyl and its salts such as ortho-phenylphenol; dibromo hexamidine and its salts including isethionate (4,4'-hexamethylenedioxy-bis(3-bromo-benzamidine) and 4,4'-hexamethylene-dioxy-bis(3-bromo-benzamidinium 2-hydroxyethanesulfonate); mercury, (aceto-o) phenyl (i.e. phenyl mercuric acetate) and mercurate(2-), (orthoboate(3-)-o)phenyl, dihydrogene (i.e. phenyl mercuric borate); 4-chloro-3,5-dimethylphenol (Chloroxylenol); poly-(hexamethylene biguanide) hydrochloride; 2-benzyl-4-chlorphenol (Methenamine); 1-(3-chloroallyl)-3,5,7-triaza-1-azonia-adamantanchloride (Quaternium 15), 1,3-bis(hydroxymethyl)-5,5-dimethyl-2,4-imidazolidinedione (DMDM hydantoin, Glydant®); 1,3-Dichloro-5,5-dimethylhydantoin; 1,2-dibromo-2,4-dicyano butane; 2,2' methylene-bis(6-bromo-4-chloro phenol) bromo-chlorophene; 2-benzyl-4-chlorophenol (Chlorophenone); chloracetamide; 3-(4-chlorophenoxy)-1,2-propandiol(chlorophenesin); phenyl-methoxymethanol and ((phenylmethoxy)methoxy)-methanol (benzylhemiformal); N-alkyl(C12-C22)trimethyl ammoniumbromide and -chloride (cetrimonium bromide, cetrimonium chloride); dimethydidecylammonium chloride; benzyl-dimethyl-(4-(2-(4-(1,1,3,3-tetramethylbutyl)-phenoxy)-ethoxy)-ethyl)- ammonium chloride (benzethonium chloride); Alkyl-(C8-C18)-dimethyl-benzylammonium chloride, - bromide and saccharinate (benzalkonium chlo-ride, benzalkonium bromide, benzalkonium saccharinate); mercurate(1-ethyl)2-mercaptobenzoate(2-)-O,S-,hydrogene (Thiomersal or Thiomerosal); silver compounds such as organic silver salts, inorganic silver salts, silver chloride including formulations thereof such as JM Acticare® and micronized silver particles, organic silver complexes such as for example silver citrate (Tinosan SDC®) or inorganic silvers such as silver zeolites and silver glass compounds (e.g. Irgaguard® B5000, Irgaguard® B6000, Irgaguard® B7000) and others described in WO-A-99/18790, EP1041879B1, W02008/128896; inorganic or organic complexes of metal such as Cu, Zn, Sn, Au etc.; geraniol, tosylchloramide sodium (Chloramin T); 3-(3,4-dichlorphenyl)-1,1-dimethylharnstoff (Diuron®); dichlofluanid; tolylfluanid; terbutryn; cybutryne; (RS)-4-[1-(2,3-dimethylphenyl)ethyl]-3H-imidazole; 2-butanone peroxide; 4-(2-nitrobutyl) morpholine; N-(3-aminopropyl)-N-dodecylpropane-1 ,3-diamine (Diamin®); dithio-2,2'-bis(N-methylbenzamide); mecetroniumetilsulfat; 5-ethyl-1-aza-3,7-dioxabicyclo-(3,3,0)octan; 2,2-dibromo-2-cyanoacetamide; methylbenzimidazol-2-ylcarbamat (Carbendazim®); 1,2-dibromo-2,4-dicyanobutane; 4,4-Dimethyloxazolidine; tetrakis(hydroxymethyl)phosphonium sulfate; octenidine dihydrochloride; tebuconazole; glucoprotamine; Amines, n-C10-16- alkyltrimethylenedi-, reaction products with chloroacetic acid (Ampholyte 20®), PVP iodine; sodium iodinate, 1,3,5-Tris-(2-hydroxyethyl)-1,3,5-hexahydrotriazin; Dazomet.

Preferred additional antimicrobial agents for closed water systems are selected from the group consisting of dialdehydes; components containing an antimicrobial metal such as antimicrobial silver; formic acid, chlorine dioxide and components releasing formic acid or chlorine dioxide, and antimicrobial compounds of molecular weight 80 to about 400 g/mol.

Likewise of particular interest is the use of vanadium pentoxide particles as a biocide in coatings, for example for paints. The invention therefore also relates to those compositions whose component (A) is a film-forming binder for coatings, and which contain vanadium pentoxide particles as the component (B).

Multilayer systems are possible here as well, where the concentration of component (B) in the outer layer can be relatively high, for example from 1 to 15 parts by weight of (B), in particular 3 - 10 parts by weight of (B), per 100 parts by weight of solid binder (A).

The binder (component (A)) can in principle be any binder which is customary in industry, for example those described in Ullmann's Encyclopedia of Industrial Chemistry, 5th Edition, Vol. A18, pp. 368-426, VCH, Weinheim 1991. In general, it is a film-forming binder based on a thermoplastic or thermosetting resin, predominantly on a thermosetting resin. Examples thereof are alkyd, acrylic, polyester, phenolic, melamine, epoxy and polyurethane resins and mixtures thereof.

Component (A) can be a cold-curable or hot-curable binder; the addition of a curing catalyst may be advantageous. Suitable catalysts which accelerate curing of the binder are described, for example, in Ullmann's Encyclopedia of Industrial Chemistry, Vol. A 18, p.469, VCH Verlagsgesellschaft, Weinheim 1991.

Preference is given to coating compositions in which component (A) is a binder comprising a functional acrylate resin and a crosslinking agent.

Examples of coating compositions containing specific binders are:
1. paints based on cold- or hot-crosslinkable alkyd, acrylate, polyester, epoxy or melamine resins or mixtures of such resins, if desired with addition of a curing catalyst;
2. two-component polyurethane paints based on hydroxyl-containing acrylate, polyester or polyether resins and aliphatic or aromatic isocyanates, isocyanurates or polyisocyanates;
3. one-component polyurethane paints based on blocked isocyanates, isocyanurates or polyisocyanates which are deblocked during baking, if desired with addition of a melamine resin;
4. one-component polyurethane paints based on a trisalkoxycarbonyltriazine crosslinker and a hydroxyl group containing resin such as acrylate, polyester or polyether resins;
5. one-component polyurethane paints based on aliphatic or aromatic urethane-acrylates or polyurethaneacrylates having free amino groups within the urethane structure and melamine resins or polyether resins, if necessary with curing catalyst;
6. two-component paints based on (poly)ketimines and aliphatic or aromatic isocyanates, isocyanurates or polyisocyanates;
7. two-component paints based on (poly)ketimines and an unsaturated acrylate resin or a polyacetoacetate resin or a methacrylamidoglycolate methyl ester;
8. two-component paints based on carboxyl- or amino-containing polyacrylates and polyepoxides;
9. two-component paints based on acrylate resins containing anhydride groups and on a polyhydroxy or polyamino component;
10. two-component paints based on acrylate-containing anhydrides and polyepoxides;
11. two-component paints based on (poly)oxazolines and acrylate resins containing anhydride groups, or unsaturated acrylate resins, or aliphatic or aromatic isocyanates, isocyanurates or polyisocyanates;
12. two-component paints based on unsaturated polyacrylates and polymalonates;
13. thermoplastic polyacrylate paints based on thermoplastic acrylate resins or externally crosslinking acrylate resins in combination with etherified melamine resins;
14. paint systems based on siloxane-modified or fluorine-modified acrylate resins;
15. paint systems , especially for clearcoats, based on malonate-blocked isocyanates with melamine resins (e.g. hexamethoxymethylmelamine) as crosslinker (acid catalyzed);
16. UV-curable systems based on oligomeric urethane acrylates, or oligomeric urethane acrylates in combination with other oligomers or monomers;
17. dual cure systems, which are cured first by heat and subsequently by UV or electron irradiation, or vice versa, and whose components contain ethylenic double bonds capable to react on irradiation with UV light in presence of a photoinitiator or with an electron beam.

In addition to components (A) and (B), the coating composition according to the invention preferably comprises as component (C) a light stabilizer of the sterically hindered amine type, the 2-(2-hydroxyphenyl)-1,3,5-triazine and/or 2-hydroxyphenyl-2H-benzotriazole type. Further examples for light stabilizers of the 2-(2-hydroxyphenyl)-1,3,5-triazine type advantageously to be added can be found e.g. in the publications US-A-4619956, EP-A-434608, US-A-5198498, US-A-5322868, US-A-5369140, US-A-5298067, WO-94/18278, EP-A-704437, GB-A-2297091, WO-96/28431. Of special technical interest is the addition of the 2-(2-hydroxyphenyl)-1,3,5-triazines and/or 2-hydroxyphenyl-2H-benzotriazoles, especially the 2-(2-hydroxyphenyl)-1,3,5-triazines.

To achieve maximum light stability, it is of particular interest to add sterically hindered amines. The invention therefore also relates to a coating composition which in addition to components (A) and (B) comprises as component (C) a light stabilizer of the sterically hindered amine type.

This stabilizer is preferably a 2,2,6,6-tetraalkylpiperidine derivative containing at least one group of the formula 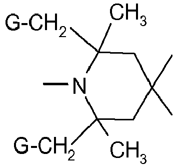 in which G is hydrogen or methyl, especially hydrogen. Examples of tetraalkylpiperidine derivatives which can be used as component (C) are given in EP-A-356 677, pages 3-17, sections a) to f).

Apart from components (A), (B) and, if used, (C), the coating composition can also comprise further components, examples being solvents, pigments, dyes, plasticizers, stabilizers, thixotropic agents, drying catalysts and/or levelling agents. Examples of possible components are those described in Ullmann's Encyclopedia of Industrial Chemistry, 5th Edition, Vol. A18, pp. 429-471, VCH, Weinheim 1991.

Possible drying catalysts or curing catalysts are, for example, organometallic compounds, amines, amino-containing resins and/or phosphines. Examples of organometallic compounds are metal carboxylates, especially those of the metals Pb, MN, Co, Zn, Zr or Cu, or metal chelates, especially those of the metals Al, Ti or Zr, or organometallic compounds such as organotin compounds, for example.

Examples of metal carboxylates are the stearates of Pb, Mn or Zn, the octoates of Co, Zn or Cu, the naphthenates of Mn and Co or the corresponding linoleates, resinates or tallates.

Examples of metal chelates are the aluminum, titanium or zirconium chelates of acetylacetone, ethyl acetylacetate, salicylaldehyde, salicylaldoxime, o-hydroxyacetophenone or ethyl trifluoroacetylacetate, and the alkoxides of these metals.

Examples of organotin compounds are dibutyltin oxide, dibutyltin dilaurate or dibutyltin dioctoate.

Examples of amines are, in particular, tertiary amines, for example tributylamine, triethanolamine, N-methyldiethanolamine, N-dimethylethanolamine, N-ethylmorpholine, N-methylmorpholine or diazabicyclooctane (triethylenediamine) and salts thereof. Further examples are quaternary ammonium salts, for example trimethylbenzylammonium chloride.

Amino-containing resins are simultaneously binder and curing catalyst. Examples thereof are amino-containing acrylate copolymers.

The curing catalyst used can also be a phosphine, for example triphenylphosphine.

The coating compositions can also be radiation-curable coating compositions. In this case, the binder essentially comprises monomeric or oligomeric compounds containing ethylenically unsaturated bonds, which after application are cured by actinic radiation, i.e. converted into a crosslinked, high molecular weight form. Where the system is UV-curing, it generally contains a photoinitiator as well. Corresponding systems are described in the abovementioned publication Ullmann's Encyclopedia of Industrial Chemistry, 5th Edition, Vol. A18, pages 451-453. In radiation-curable coating compositions, the stabilizers can also be employed without the addition of sterically hindered amines.

The novel coating compositions can be applied to the substrates by the customary methods, for example by brushing, spraying, pouring, dipping or electrophoresis; see also Ullmann's Encyclopedia of Industrial Chemistry, 5th Edition, Vol. A18, pp. 491-500.

Depending on the binder system, the coatings can be cured at room temperature or by heating. The coatings are preferably cured at 50 - 150°C, and in the case of powder coatings or coil coatings even at higher temperatures.

The coating compositions can comprise an organic solvent or solvent mixture in which the binder is soluble. The coating composition can otherwise be an aqueous solution or dispersion. The vehicle can also be a mixture of organic solvent and water. The coating composition may be a high-solids paint or can be solvent-free (e.g. a powder coating material). Powder coatings are, for example, those described in Ullmann's Encyclopedia of Industrial Chemistry, 5th Ed., A18, pages 438-444. The powder coating material may also have the form of a powder-slurry (dispersion of the powder preferably in water).

The present invention will now be illustrated in greater detail by the ensuing examples and with reference to the attached drawings. In the drawings:
- Fig.1: illustrates the concept of antifouling activity of V-HPO when immobilized onto a paint layer,
- Fig. 2: illustrates the concept of using environmentally benign V₂O₅ nanoparticles as an active component in antibacterial and antifouling formulations,
- Fig. 3: depicts microscopic images of V₂O₅ nanoparticles,
- Fig. 4: shows the brominating activity of V₂O₅,
- Fig. 5: shows the bromination activity of the V₂O₅ nanoparticles in seawater with varying reaction parameters,
- Fig. 6: shows the bromination reaction of MCD in a seawater re-utilization assay of V₂O₅ nanoparticles,
- Fig. 7: shows representative digital images of the influence of V₂O₅ nanoparticles catalytic activity on Gram negative bacterial growth,
- Fig. 8: shows representative digital images of the influence of V₂O₅ nanoparticles catalytic activity on Gram positive bacterial growth,
- Fig. 9.: shows (A) stainless steel plates painted with commercial available boat paint (white) without and with V₂O₅ nanoparticles and (B) an apparatus for mimicking sea conditions, and
- Fig. 10: shows fluorescent microscopy images of bacterial cell density/adhesion,
- Fig. 11: shows digital images of stainless steel plates covered with a commercially available paint for boat hull without and with V₂O₅ nanowires after 0 and 60 days immersion in seawater.

### EXAMPLES

### Example 1: Synthesis of V₂O₅ nanoparticles

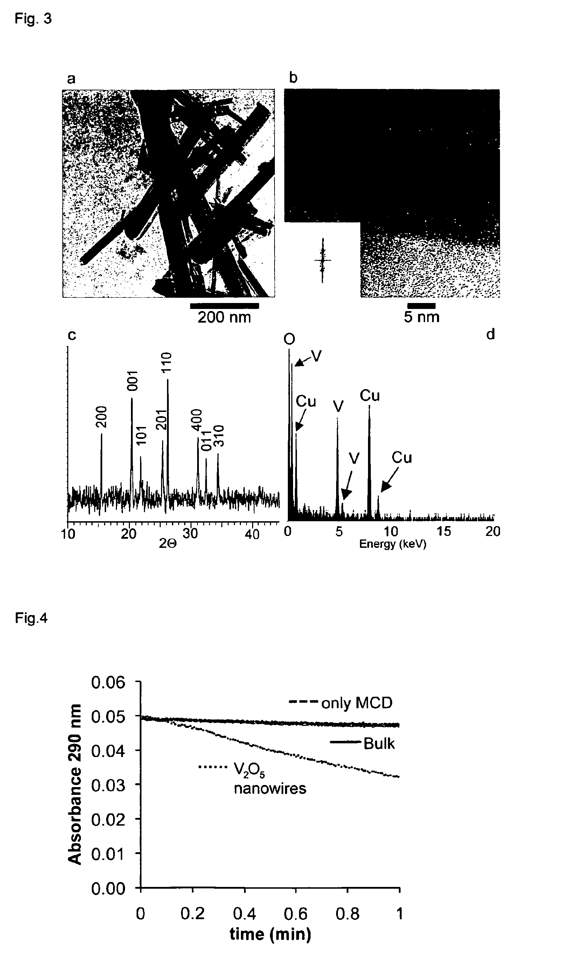

V₂O₅ nanoparticles were synthesized as described in ref. ^{[18]}. In brief, 8 mmol of VOSO₄·nH₂O (Alfa Aesar, purity >99.9%) and 5 mmol of KBrO₃ (Sigma Aldrich, purity >98%) were dissolved in 30 ml of distilled water and stirred for 30 min at room temperature. Nitric acid (TraceSELECT^{®} Ultra, ≥65%, Fluka Chemie AG, Basel, Switzerland) was added dropwise under stirring until pH 2 was reached. The solution was transferred to a teflon-lined stainless steel autoclave, which was maintained at 180 °C for 24 h. After cooling to room temperature the solution was filtered and washed several times with distilled water and ethanol. The dark yellow precipitate was dried in an oven at 80 °C overnight and analyzed by high-resolution transmission electron microscopy (HRTEM) and X-ray diffraction (XRD). The nanoparticles had an average length of 300 nm length and a width of 20 nm (Fig. 3). The nanoparticles are highly dispersible in aqueous solution.

Fig. 3 depicts microscopic images of V₂O₅ nanoparticles, (A) TEM and (B) HRTEM showing the lattice fringes. Inset: Fourier Fast Transform (FFT). (C) XRD pattern of V₂O₅ nanoparticles. All reflections can be indexed to orthorhombic V₂O₅. (D) Correspondent EDX spectra showing the presence of vanadium (V) and oxygen (O). (Copper (Cu) peaks are due to the TEM grid.)

### Example 2: Bromination activity of V₂O₅ nanoparticles

In general the bromination activity of freshly synthesized VO₅ nanoparticles was determined spectrophotometrically using the classical 2-chlorodimedone (MCD) assay as previously described for V-HPO^{[22]}, i.e. by measuring initial rates of 2-chlorodimedone consumption at 290 nm (ε ₂₉₀ₙₘ = 19.9 mM⁻¹ cm⁻¹) on a Cary 5G UV-Vis-NIR spectrophotometer (Varian Inc., Palo Alto, CA, USA). Typically, bromination activity was measured in seawater (Cat. No. S9148, Sigma-Aldrich; Germany) varying concentration V₂O₅ nanoparticles (0-0.05 mg/ml) and keeping constant the concentrations of MCD (2.5 µM) (Cat. No. H12035, Alfa Aeser, Germany), KBr (1mM)(Cat. No. P0838BioXtra, ≥ 99.0%, Sigma-Aldrich) and H₂O₂ (5 µM) (Cat. No. 8070.1, ROTIPURAN^{®} p.a., ISO, stabilized, Carl Roth GmbH & Co.KG Karlsruhe, Germany) during 60 s at 25±2 °C. Prior to the experiments, H₂O₂ concentration was calculated by measuring the absorbance of the solution at 240 nm and molar extinction coefficient of 43.6 M⁻¹ cm⁻¹. The average values of the initial bromination rates of three traces were used in the calculations. As controls the following experiments were performed: (i) bulk V₂O₅ (Cat. No. 221899, Sigma-Aldrich, Stenheim, Germany) (0.02 mg/ml in seawater) replaced the V₂O₅ nanoparticles and (ii) the reaction was carried out in the absence of H₂O₂ and Br⁻. Actually the bromination activity was measured using seawater pH values and Br⁻ and H₂O₂ concentrations. V₂O₅ nanoparticles (0.02 mg/ml) were incubated with Br⁻ (1 mM), MCD (5 µM) and H₂O₂ (10 µM). The initial rates of MCD consumption were measured at 290 nm (ε MCD, ₂₉₀ₙₘ =19.9 MM⁻¹ cm⁻¹). A decay of the MCD concentration was indicative of an intrinsic brominating activity of the V₂O₅ nanoparticles through HOBr formation (see Fig.4, lower line). Control experiments (for the particle size and the bromination activity) were carried out (i) by replacing V₂O₅ nanoparticles with commercially available bulk V₂O₅, and in (ii) the absence of both Br⁻ and H₂O₂ but in the presence of MCD and V₂O₅ nanoparticles. For (i) a significantly smaller bromination catalytic activity (1/12) was found that is attributed to the specificity of the brominating activity of the V₂O₅ nanoparticles (see Fig. 4, upper line, "Bulk"). The absence of an unspecific reaction between V₂O₅ nanoparticles and MCD for (ii) (see Fig. 4, upper line, "only MCD") showed that both components (Br⁻ and H₂O₂) are essential for the MCD bromination reaction catalyzed by the V₂O₅ nanoparticles (which is also observed for V-HPOs^{[23]}).

### Example 3: Bromination activity of V₂O₅ nanoparticles (varying reaction parameters)

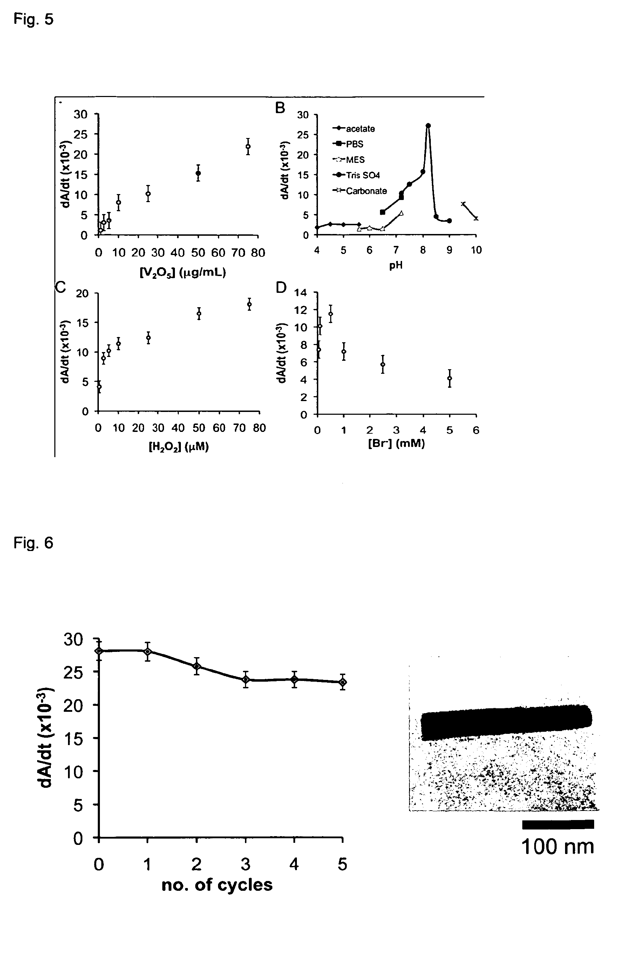

The reaction rate was determined as described in Example 2 by monitoring the decay of absorbance of MCD (5 µM) at 290 nm (ε_{290nm, MCD} = 19.9 mM⁻¹ cm⁻¹), which is caused by the formation of monobrominated MCD (for 120 s at 25°C). The measurements with variable concentrations of V₂O₅ nanoparticles (0-0.05 mg/ml) in seawater showed a dependence of the reaction rate on the V₂O₅ concentration. The higher the concentration of nanoparticles the higher the reaction rate (Fig. 5A). The decay of the MCD concentration is caused by the brominating activity of the V₂O₅ nanoparticles.

The bromination activity of the V₂O₅ nanoparticles was found to be pH dependent in the pH range from 4 to 10 by using different buffer compositions and maintaining the reactants concentration constant. Assay conditions: 0.02 mg/ml V₂O₅ nanoparticles, Br⁻ (1 mM), H₂O₂ (5 µM) and MCD (5 µM). The catalytic activity of the V₂O₅ nanoparticles showed a pH optimum at pH 8.1 (Fig. 5B) indicating that the bromination activity of the V₂O₅ nanoparticles towards MCD is mediated under slightly basic conditions (in contrast to wild-type V-CPO from C. inaequalis in which has an optimal pH at 5.5.^{[24]}; a vanadium chloroperoxidase (V-CPO) mutant from C. inaequalis was shown to have a 100 fold higher k_{cat} for the formation of HOBr at pH 8.0 than the wild type enzyme^{[25]}).

The steady state kinetic parameters for the catalysis of the bromination of MCD by V₂O₅ nanoparticles were determined by varying the concentrations of H₂O₂ (0 to 80 µM while V₂O₅ (0.02 mg/ml), Br⁻ (1 mM) and MCD (5 µM) were kept constant) and the concentrations of the Br⁻ ions (0 to 5 mM while V₂O₅ (0.02 mg/ml), H₂O₂ (5 µM) and MCD (5 µM) were kept constant). Prior to the experiments, the H₂O₂ concentration was calculated by measuring the absorbance of the solution at 240 nm and by assuming molar extinction coefficient of 43.6 M⁻¹.cm⁻¹. A Michaelis-Menten behavior was found for both H₂O₂ and Br (Fig. 5C and 5D). The kinetic parameters were determined at the pH optimum of 8.1. Fig. 5C shows that V₂O₅ nanoparticles can tolerate higher concentrations of H₂O₂ without loss in their catalytic activity. This is different from V-HPO,^{[26]} other peroxidases such as HRP, haem-containing chloroperoxidase (FeCPO) from Caldaromyces fumago,^{[27]} and other inorganic nanostructured materials with an intrinsic biomimetic catalytic activity.^{[28]} Higher concentrations of Br⁻ (> 1 mM), however, inhibited the catalytic activity of the V₂O₅ nanoparticles (Fig. 5D).

The V₂O₅ nanoparticles mediate the bromination of MCD in the presence of H₂O₂ and Br⁻ with a Vₘₐₓ of 1.2×10⁻² M.s⁻¹ from which a turnover frequency (k_{cat}) of 240 s⁻¹ was determined. This k_{cat} value is two-fold higher than the one found for C. inaequalis V-CPO mutant (k_{cat} = 100 s⁻¹).^{[29]} After Lineweaver-Burk linearization, values for Kₘ of ~29.8±0.4 µM for Br⁻ and ~1.17±0.4 µM for H₂O₂ were found. These values are lower than the kinetic parameters determined for the V-CPO mutant from C. inaequalis that have Kₘ values for Br⁻ of 3.1 mM and 16 µM for H₂O₂, values that are even smaller than those found for V-HPO, which shows a reasonable brominating activity at this slightly basic pH. The kinetic data show that (i) H₂O₂ has a higher affinity for the surface of the V₂O₅ nanoparticles as observed earlier for the ABTS oxidation-mediated ^{[18]} through the formation of a peroxo intermediate at its surface and (ii) an increased brominating catalytic activity at pH 8.0 compared to the natural counterparts (V-CPOs wild type and mutant). This may be attributed to a higher availability of "active sites" at the surface of the nanoparticles compared to the enzyme, which carries only one vanadate group (VO₄³⁻) ion at its active center.

### Example 4: Recyclability of V₂O₅ nanoparticles

A re-utilization assay of the V₂O₅ particles was measured based on the catalytic activity of the particles for a series of consecutive cycles in seawater. V₂O₅ nanoparticles (0.02 mg/ml) were incubated with Br⁻ (1 mM) and H₂O₂ (5 µM) and MCD (5 µM). The consumption of MCD was measured at 290 nm for 60 s at 25°C. The reaction rate was determined by measuring MCD consumption at 290 nm (ε_{290nm, MCD} = 19.9 mM⁻¹ cm⁻¹), for 60 s at 25 °C. When the reaction faded, the mixture was centrifuged (13000 x rpm, 10 min, RT), the supernatant removed and the pellet (V₂O₅ nanoparticles) washed in MilliQ water, centrifuged and re-used following the same experimental conditions as above. After the 5^{th} consecutive cycle, 87% of the catalytic activity were retained (Fig. 6). TEM analysis showed the particle morphology unchanged after five cycles (Fig. 6 inset).

### Example 5: Antibacterial activity of V₂O₅ towards Gram positive and Gram negative

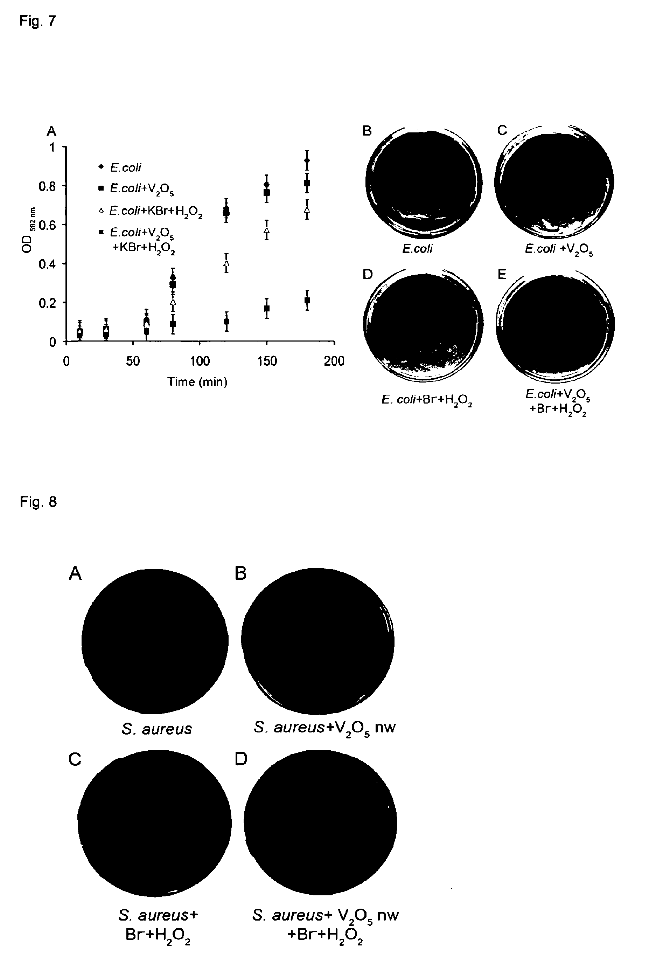

The antibacterial activity of V₂O₅ nanoparticles against Gram negative (E. coli) and Gram positive (S. aureus) bacteria was evaluated under slightly alkaline conditions (pH 8.1). E.coli (in LB medium) and S. aureus (in BHI Broth) cells were incubated with V₂O₅ nanoparticles (0.075 mg/ml), Br⁻ (1 mM) and H₂O₂ (10 µM) for 180 min, and the optical density (OD₅₉₂ₙₘ) measured at different time points. As controls, the OD₅₉₂ₙₘ of (i) only E. coli or S. aureus culture, (ii) E. coli or S. aureus culture co-incubated with V₂O₅ nanoparticles (0.075 mg/ml) and (iii) Br⁻ (1 mM) and H₂O₂ (10 µM) were measured in parallel. A significant decrease of bacterial growth in the presence V₂O₅ nanoparticles (0.075 mg/ml), Br⁻ (1 mM) and H₂O₂ (10 µM) was observed, i.e approximately 78% for E.coli (Fig. 7A) and 90% for S. aureus of cell decay when compared with bacterial cells that were left to grow alone (no additives). The controls with Br⁻ (1 mM) and H₂O₂ (100 µM), and V₂O₅ nanoparticles (0.075 mg/ml) showed ~28% and 13% (E.coli) (Fig. 7A) and 40% and 10% (S. aureus) of cell decay respectively, indicating that a synergetic effect between V₂O₅, H₂O₂ and Br⁻. Bromide is required to obtain a strong antibacterial activity. After 180 min, the bacterial cells (50 µl) were platted on an Agar-LB medium (E.coli) and Mannitol Salt Phenol Red Agar (S. aureus) plates and left to grow for 8 h at 37°C.

Fig. 7 shows representative digital images of the influence of V₂O₅ nanoparticles catalytic activity on Gram negative (E. coli) bacterial growth. After co-incubation for 180 min at 37 °C, the bacterial cells were platted in the respective medium (Agar-LB) left to incubate for 8 h at 37°C. (A) Bacterial growth curve determined by measuring the optical density (OD) at 592 nm. (B) E. coli alone. (C) E. coli co-incubated with V₂O₅ nanoparticles (0.075 mg/ml). (D) E. coli incubated with Br⁻ (1 mM) and H₂O₂ (10 µM) and (E) E. coli incubated with V₂O₅ nanoparticles (0.075 mg/ml), Br⁻ (1 mM) and H₂O₂ (10 µM).

Fig. 8 shows representative digital images of the influence of V₂O₅ nanoparticles catalytic activity on Gram positive (S. aureus) bacterial growth. After co-incubation for 180 min at 37°C, the bacterial cells were platted in the respective medium (Mannitol Salt Phenol Red Agar) left to incubate for 8 h at 37°C. (A) S. aureus alone. (B) S. aureus co-incubated with V₂O₅ nanoparticles (0.075 mg/ml). (C) S. aureus co-incubated with Br⁻ (1 mM) and H₂O₂ (10 µM) and (D) S. aureus co-incubated with V₂O₅ nanoparticles (0.075 mg/ml), Br⁻ (1 mM) and H₂O₂ (10 µM). The color change indicates the presence/growth of bacteria. A significant decrease (~90%) on the bacterial population is observed when V₂O₅ nanoparticles, Br⁻ and H₂O₂ are placed together.

### Example 6: Water based paint compositions preserved by V₂O₅ nanoparticles

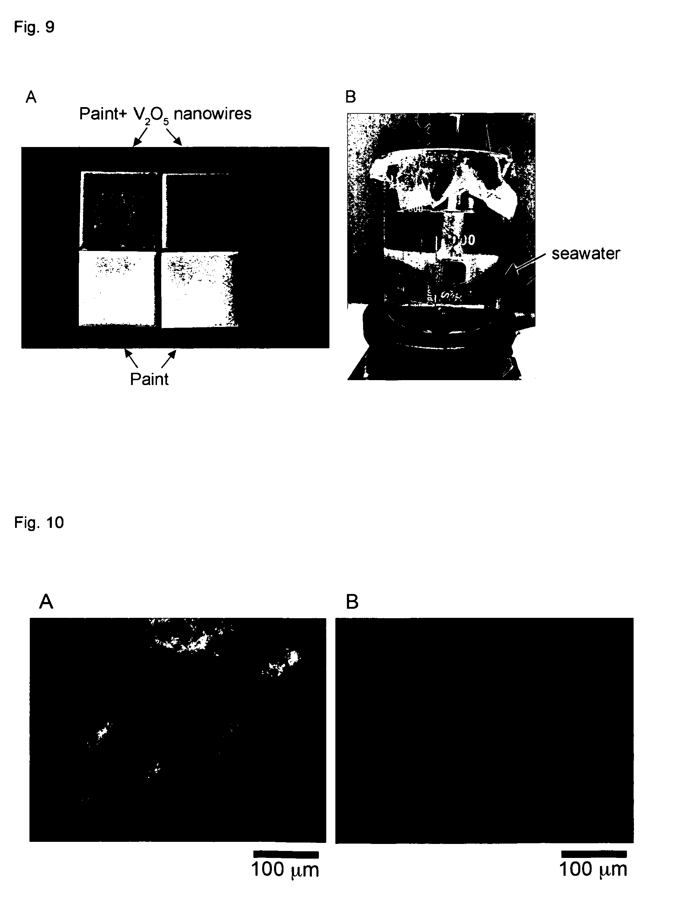

1 ml of a commercially available boat paint (silicone alkyd based paint, white color, Toplac®, International Farbenwerke GmbH, Boernsen, Germany for boat hull application) and 5 mg V₂O₅ nanoparticles were mixed, and this formulation was applied onto stainless steel surfaces yielding a greenish color (Fig. 9A, upper plates). As a control, other stainless steel surface plates were painted with the same commercial available paint without V₂O₅ (Fig. 9A, lower white plates). After complete dryness, the painted plates were vertically immersed in seawater (Adriatic Sea) supplemented with Br⁻ (1 mM) and H₂O₂ (10 µM) and kept for 2 weeks at room temperature with slow stirring and addition of fresh Br⁻ and H₂O₂ solutions every 12 h (apparatus Fig. 9B). Fluorescence microscopy images after washing (Fig. 10) showed a strongly reduced bacterial density/adhesion on surfaces coated with formulations containing V₂O₅ nanoparticles (Fig. 10B) as compared with the control experiments (Fig. 10A, scale bar = 100 µm).

### Example 6: In situ experiment

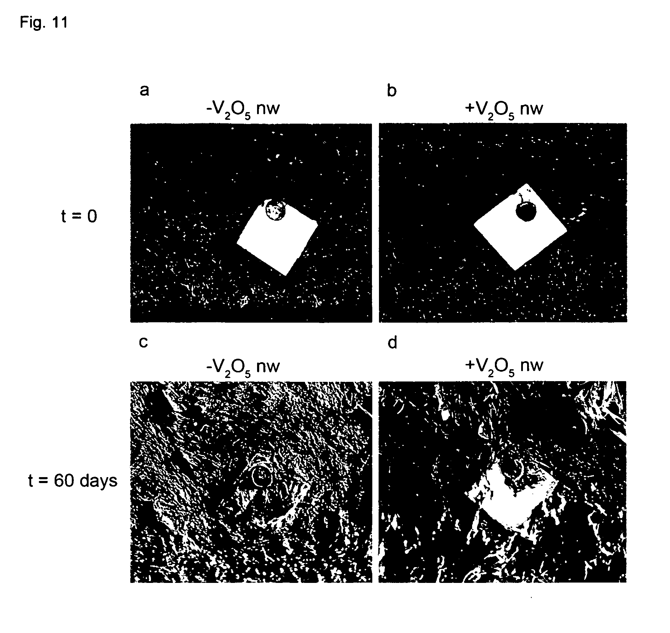

The paint formulation was prepared as described in Example 5 and applied onto stainless steel plates (2x2 cm). A hole was drilled in each plate and the plates were fixed to a boat hull that was moored into a lagoon with tidal waters directed connected to the Atlantic ocean (Foz do Arelho, Portugal) and left for 60 days (May to end of June) doing 2 times per week trajectories. The boat was removed from the seawater and the images captured using a normal digital camera. The experiments were carried out using stainless steel plates containing only paint and stainless steel plates painted with paint formulation containing V₂O₅ nanowires. The results are shown in Fig. 11. Plates a) and b) were photographed immediately after fixation. After 60 days plate c) containing no V₂O₅ nanowires suffered from severe natural biofouling while plate d) with V₂O₅ nanowires showed a complete absence of biofouling.

### Reference List

[1] R. Wever, H. L. Dekker, J. W. P. M. Van Schijndel, E. G. M. Vollenbroek, Antifouling paint containing haloperoxidase and method to determine halide - WO 1995/027009 A1.
[2] R. Wever, W. Hemrika, Handbook of Metalloproteins, A. Messerschmidt, R. Huber, T. Poulos, K. Wieghardt (eds.), John Wiley & Sons, Ltd, Chichester, 2001.
[3] S. A. Borchardt, E. J. Allain, J. J. Michels, G. W. Stearns, R. F. Kelly, W. F. McCoy, Appl. Environ. Microbiol. 2001, 67, 3174-3179.
[4] R. G. Petasne, R.G. Zika, Mar. Chem. 1997, 56, 15-25.
[5] R. Wever, M. G. M. Tromp, B. E. Krenn, A. Marjani, M. van Tol, Environ. Sci. Technol. 1991, 25, 446-449.
[6] (a) T. B. Rasmussen, M. Manefield, J. N. Andersen, L. Eberl, U. Anthoni, C. Christophersen, P. Steinberg, S. Kjelleberg, M. Givskov, Microbiology 2000, 146, 3237-3244. (b) S. Kjelleberg, P. Steinberg, Microbiol. Today 2001, 28, 134-135.
[7] - [17] deleted.
[18] R. Andre, F. Natalio, M. Humanes, J. Leppin, K. Heinze, R. Wever, W. E.G. Müller, W. Tremel, Adv. Funct. Mater. 2011, 21, 501-509.
[19] Guggenbichler et al., US 2010/0057199 A1.
[20] L. Gao, J. Zhuang, L. Nie, J. Zhang, Y. Zhang, N. Gu, T. Wang, J. Feng, D. Yang, S. Perrett, X. Yan, Nature Nanotechnol. 2007, 2, 577-583.
[21] J. Chen, S. Patil, S. Seal, J. F. McGinnis, Nature Nanotechnol. 2006, 1, 142-150.
[22] L. P. Hager, D. R. Morris, F. S. Brown, H. Eberwein, J. Biol. Chem. 1966, 241, 1969-1977. (b) E. de Boer, R. Wever, J. Biol. Chem. 1988, 263, 12326-12332.
[23] A. Butler, Coord. Chem. Rev. 1999, 187, 17-35.
[24] J. W. P. M. van Schijndel, E. G. M. Vollenbroek, R. Wever, Biochim. Biophys. Acta 1993, 1161, 249-256.
[25] Z. Hasan, R. Renirie, R. Kerkman, H. J. Ruijssenaars, A. F. Hartog, R. Wever, J. Biol. Chem. 2006, 281, 9738-9744.
[26] R. Renirie, C. Pierlot, J. M. Aubry, A. F. Hartog, H. E. Schoemaker, P. L. Alsters, R. Wever, Adv. Synth. Catal. 2003, 345, 849-858.
[27] (a) J. R. Kanofsky, J. Biol. Chem. 1984, 259, 5596-5600. (b) K. J. Baynton, J. K. Bewtra, N. Biswas, K. E. Taylor, Biochim Biophys Acta. 1994, 1206, 272-278.
[28] (a) L. Gao, J. Zhuang, L. Nie, J. Zhang, Y. Zhang, N. Gu, T. Wang, J. Feng, D. Yang, S. Perrett, X. Yan, Nature Nanotech. 2007, 2, 577-583. (b) J. Fan, J.-J. Yin, B. Ning, X. Wu, Y. Hud, M. Ferrari, G. J. Anderson, J. Wei, Y. Zhao, G. Nie, Biomaterials 2011, 32, 1611-1618.
[29] Z. Hasan, R. Renirie, R. Kerkman, H. J. Ruijssenaars, A. F. Hartog, R. Wever, J. Biol. Chem. 2006, 281, 9738-9744.

## Claims

1. Use of vanadium pentoxide particles as a biocide.

2. Use of vanadium pentoxide particles for the prevention of biofouling and/or growth of microorganisms.

3. Use according to claim 1 or 2 to prevent the growth of bacteria and/or organisms that cause biofouling, such as algae, barnacles, diatoms, mussels.

4. Use according to one of claims 1 to 3 together with an oxidizing agent and a halide selected from chloride, bromide and iodide.

5. Use according to claim 4, wherein the oxidizing agent is hydrogen peroxide.

6. Use according to one of claims 1 to 5, wherein the vanadium pentoxide particles have an average particle size of from 5 nm to 1 mm, preferably from 10 nm to 1 µm and particularly from 10 nm to 500 nm.

7. Use according to claim 6, wherein the vanadium pentoxide particles are nanoparticles, preferably nanowires.

8. Use according to claim 6, wherein the vanadium pentoxide particles have an average particle size between 100 nm and 100 µm.

9. Biocidal composition comprising vanadium pentoxide particles as defined in one of claims 1 to 8, dispersed in a matrix material, which matrix material is selected from coating binders, coating materials containing binders, solvents and/or further coating additives, water, aqueous solutions.

10. Biocidal composition according to claim 9, which is a coating composition wherein the matrix material comprises one or more film forming binders.

11. Biocidal composition according to claim 9, which is an aqueous formulation.

12. Biocidal composition according to one of claims 9 to 11, wherein the matrix material is a coating binder or film forming binder, or wherein the matrix material is water or an aqueous solution or formulation selected from water processing fluids, aqueous cooling fluids, cleaning compositions, rinsing liquors.

13. Biocidal composition of one of claims 9 to 12, containing vanadium pentoxide particles in an amount of 0.0001 to 5.0 percent by weight, preferably 0.001 to 1.0 percent by weight, relative to the weight of the matrix material.

14. Method for preventing biofouling of a substrate, which method comprises adding vanadium pentoxide particles as defined in one of claims 1 to 8 to a matrix material as defined above and contacting said matrix material with the substrate.

15. Method of imparting biocidal properties to the surface of a substrate, which method comprises coating the surface with a biocidal composition according to one of claims 9 to 13 which contains a coating binder or film forming binder.
